# FASCICULE DE BREVET EUROPEEN

(11) **EP 2 149 002 B1**
(45) Date de publication et mention de la délivrance du brevet: **05.10.2011**
(21) Numéro de dépôt: 08805810.2
(22) Date de dépôt: 19.05.2008
(51) Int. Cl.: F16K 17/30, F16L 55/10, F16L 55/136

(54) **DISPOSITIF DE SECURITE COMPACT A DECLENCHEMENT AUTOMATIQUE POUR CONTROLER LE DEBIT D'UN FLUIDE**
AUTOMATISCH AUSGELÖSTE KOMPAKTE SICHERHEITSVORRICHTUNG ZUR STEUERUNG DES FLUSSES EINER FLÜSSIGKEIT
AUTOMATICALLY TRIPPED COMPACT SAFETY DEVICE FOR CONTROLLING THE FLOW OF A FLUID

(30) Priorité: 25.05.2007 FR 0703767
(43) Date de publication de la demande: 03.02.2010
(73) Titulaire: GDF SUEZ, 92400 Courbevoie (FR)
(72) Inventeur: DALIBEY, Amine, F-94800 Villejuif (FR); MANGON, Didier, F-80000 Amiens (FR)
(74) Mandataire: Bentz, Jean-Paul
(86) Numéro de dépôt international: PCT/FR2008/050864
(87) Numéro de publication internationale: WO 2008/145939

(56) Documents cités:
- EP-A- 1 059 481
- US-A- 4 958 657
- US-A1- 2004 103 943

## Description

La présente invention concerne, de façon générale, les dispositifs du type représenté par les vannes de sécurité à déclenchement automatique utilisées dans les réseaux de distribution de gaz.

Plus précisément, l'invention concerne un dispositif de sécurité inséré dans une canalisation de fluide de section minimum déterminée pour la protéger contre un débit excessif du fluide qui y circule d'amont en aval, ce dispositif comprenant :
- un tube présentant des extrémités amont et aval ouvertes et offrant au fluide une voie de circulation centrale,
- des moyens de retenue pour maintenir ce dispositif en place dans la canalisation,
- des moyens de contrôle de circulation de fluide, incluant un clapet central et un obturateur annulaire élastiquement déformable et fixé à la périphérie externe du tube, et
- un corps creux fixé au tube dans le prolongement et en amont de ce tube,
les moyens de retenue incluant un premier ensemble de griffes dont chacune présente une extrémité libre sollicitée par une force élastique vers une configuration de déploiement radial équivalente à celle des baleines d'un parapluie ouvert, et ce dispositif évoluant entre une configuration de repos, qu'il adopte en cas de débit normal du fluide et dans laquelle le clapet central libère la voie de circulation centrale, et une configuration de sécurité, qu'il adopte en cas de débit excessif du fluide et dans laquelle le clapet central obture la voie de circulation centrale, les griffes présentant sélectivement, sous application d'une compression radiale, une configuration de repli dans laquelle leurs extrémités libres respectives sont tournées vers l'obturateur annulaire.

Un dispositif répondant à cette définition générique est notamment connu de l'homme du métier par le brevet US 6 962 165.

Certains réseaux de distribution de fluides justifient des mesures de sécurité particulières, imposées par la nature du fluide transporté et par d'éventuels risques d'endommagement des conduites dont ces réseaux sont constitués.

Par exemple, les réseaux de distribution de gaz en zone urbaine s'étendent généralement sous les chaussées et les trottoirs, c'est-à-dire sous des ouvrages du domaine public susceptibles de faire l'objet d'interventions diverses, et notamment d'opérations de terrassement.

Or, si une conduite de gaz se trouve accidentellement arrachée ou sectionnée à l'occasion d'une telle opération, la fuite de gaz qui en résulte immédiatement fait apparaître un risque élevé d'incendie ou d'explosion.

Dans ce contexte, des vannes de sécurité ont été mises au point pour obturer les conduites de gaz dès qu'un débit de gaz anormalement élevé y est détecté.

A ce jour, les vannes de sécurité ne peuvent cependant être facilement montées que sur des réseaux neufs en cours de construction, ou éventuellement sur des réseaux existants, mais à l'occasion seulement de leur rénovation.

En effet, dans la mesure où les conduites des réseaux existants peuvent avoir été construites à des époques différentes et suivant des normes différentes, où elles n'ont pas nécessairement des diamètres définis avec une très grande précision, et où elles présentent sur leur longueur des obstacles, bavures, écrasements, restrictions, et / ou rayons de courbure variés, la mise en place d'une vanne de sécurité dans un réseau existant reste une opération délicate.

Ainsi, bien que la vanne décrite dans le brevet US 6 962 165 précité soit conçue pour permettre une telle opération, sa conception spécifique restreint son application à des réseaux ne présentant que des rayons de courbure relativement importants.

L'invention, qui se situe dans ce contexte, a donc pour but de proposer un dispositif de sécurité susceptible d'être mis en place, sans excavation, dans la plupart des réseaux connus, y compris dans des réseaux présentant des rayons de courbure faibles, par exemple de l'ordre de dix fois le diamètre de la canalisation dans laquelle ce dispositif est introduit.

A cette fin, le dispositif de l'invention, par ailleurs conforme à la définition générique qu'en donne le préambule ci-dessus, est essentiellement caractérisé en ce que chacune des griffes présente une extrémité liée fixée à la périphérie du tube en amont de l'obturateur annulaire.

De préférence, l'obturateur annulaire comprend un joint en matériau élastomère dont une extrémité aval est fixée au tube, ce joint présentant une symétrie de révolution, une section axiale au moins partiellement conique, et une concavité tournée vers l'amont.

Il est par ailleurs judicieux de prévoir que le joint de l'obturateur annulaire présente sélectivement, sous application d'une compression radiale, un diamètre total inférieur à celui de la section minimum déterminée de la canalisation, et, hors contrainte, un diamètre total supérieur à celui de la section minimum déterminée de la canalisation.

Pour optimiser l'étanchéité du dispositif, le joint de l'obturateur annulaire peut avantageusement être bordé par une lèvre sensiblement cylindrique et coaxiale au tube.

Par ailleurs, pour éviter le retournement du joint, l'obturateur annulaire peut comprendre une bague de retenue renforçant l'extrémité aval du joint et la maintenant sur le tube.

Dans un mode de réalisation efficace de l'invention, les moyens de retenue comprennent une bague enserrant le tube et reliant entre elles les extrémités liées respectives des griffes du premier ensemble de griffes.

En outre, chacune des griffes peut présenter, depuis son extrémité liée vers son extrémité libre, une largeur d'abord décroissante sur les sept huitièmes au moins de sa longueur jusqu'à atteindre une valeur minimale, puis une largeur croissante à partir de cette valeur minimale.

Chacune de ces griffes peut par ailleurs présenter, en configuration de déploiement, une cambrure qui l'éloigne du tube à distance croissante de son extrémité liée.

En plus du premier ensemble de griffes, les moyens de retenue peuvent inclure un deuxième ensemble de griffes de même constitution que le premier ensemble et décalé axialement le long du tube par rapport à ce premier ensemble, les griffes des premier et deuxième ensembles étant disposées en quinconce les unes par rapport aux autres.

Une tenue optimale du dispositif dans la canalisation peut être obtenue en réalisant les moyens de retenue en acier.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue en perspective agrandie d'un dispositif conforme à l'invention, représenté dans la configuration qu'il adopte en l'absence de toute contrainte ;
- La figure 2 est une vue en coupe longitudinale du dispositif illustré à la figure 1, dont l'échelle a été légèrement réduite ;
- La figure 3 est une vue en coupe longitudinale d'un outil de mise en place dans une canalisation d'un dispositif conforme à l'invention ; et
- La figure 4 est une vue en coupe longitudinale à échelle agrandie d'un composant d'un dispositif conforme à l'invention, représenté après insertion dans une canalisation.

Comme annoncé précédemment, l'invention concerne un dispositif de sécurité destiné à être inséré dans une canalisation K de fluide de section minimum S déterminée, et plus spécifiquement dans une canalisation de gaz dans l'application privilégiée de l'invention, pour protéger cette canalisation contre un débit excessif du fluide, et plus spécifiquement du gaz, qui y circule depuis une région amont X- vers une région aval X+.

De façon connue en soi, ce dispositif comprend essentiellement un tube 1, des moyens de retenue 2 pour maintenir le tube 1 en place dans la canalisation K, des moyens de contrôle de circulation de fluide incluant un clapet central 3 et un obturateur annulaire 4, et un corps creux 5 fixé au tube 1 dans le prolongement et en amont de ce tube.

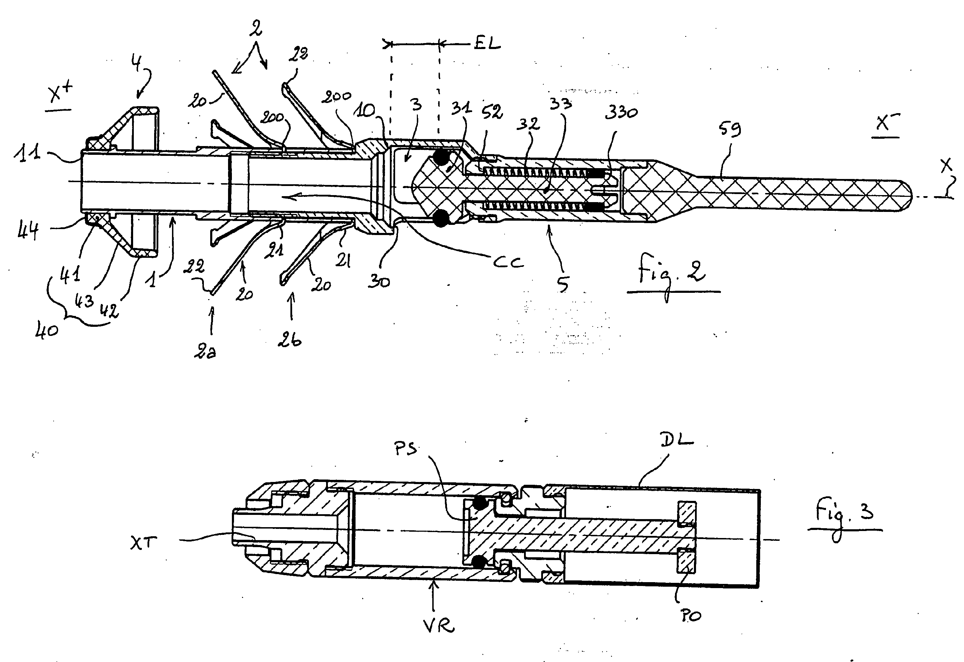

Le tube 1, qui peut être constitué de plusieurs parties, est ouvert à ses extrémités amont 10 et aval 11, et offre ainsi spontanément au fluide une voie de circulation centrale CC (figure 2), contrôlée par le clapet central 3.

Comme le montre encore cette figure, le corps creux 5 et le tube 1 sont longitudinalement séparés l'un de l'autre par un espace longitudinal ouvert EL qui offre au fluide circulant dans la canalisation K un passage que contrôle le clapet central 3 et qui relie l'extérieur du corps creux 5 à l'intérieur du tube 1.

Dans ces conditions, le dispositif de l'invention peut évoluer entre une configuration de repos, qu'il adopte en cas de débit normal du fluide et dans laquelle le clapet central 3 libère la voie de circulation centrale CC, et une configuration de sécurité, qu'il adopte en cas de débit excessif du fluide et dans laquelle le clapet central 3 obture la voie de circulation centrale CC.

Le clapet central 3 est essentiellement constitué d'un siège de clapet 30 formé sur le tube 1, d'un obturateur central 31 qui s'applique sur le siège de clapet 30 en configuration de sécurité, et d'un ressort 32.

Le ressort 32 exerce sur l'obturateur central 31 une force élastique d'ouverture qui sollicite cet obturateur 31 à distance du siège de clapet 30, à l'encontre d'une force de fermeture exercée sur cet obturateur central 31 par une perte de charge subie, entre les régions directement en amont et en aval de l'obturateur central, par le fluide circulant dans la canalisation K.

Tant que le débit du fluide dans cette canalisation est normal, la force de fermeture est vaincue par la force exercée par le ressort 32, de sorte que l'obturateur central 31 est maintenu à distance du siège de clapet 30.

En revanche, dès que le débit du fluide dans la canalisation K devient excessif, la force exercée par le ressort 32 est vaincue par la force de fermeture exercée par la perte de charge, qui croît avec le débit, de sorte que le ressort 32 est comprimé et que l'obturateur central 31 est appliqué sur le siège de clapet 30.

Comme le comprendra aisément l'homme de métier au moins à la lecture de ce qui précède, la valeur limite du débit au-delà de laquelle ce débit est considéré comme excessif peut être ajustée par un réglage de la force de tarage du ressort 32.

L'obturateur central 31 est par exemple fixé à l'extrémité aval d'une tige 33 sur laquelle agit le ressort 32, cette tige 33 et le ressort 32 étant logés et guidés dans le corps creux 5 et donc disposés en amont du tube 1.

Par exemple, le ressort 32 est interposé entre une butée interne 52 du corps creux 5 et une butée 330 formée sur la tige 33.

Comme illustré, le profil amont du dispositif ou du corps creux 5 peut être optimisé sur le plan aérodynamique par l'ajout d'une pièce flexible 59 en forme de nez d'avion, fixée au corps creux 5 en amont et dans le prolongement de ce dernier, cette pièce 59 permettant à la fois de réduire les pertes de charge du dispositif en minimisant les perturbations du flux de fluide, de guider le dispositif dans les coudes de la canalisation K, et de servir de butée amont au dispositif lors de sa mise en place dans une prise de branchement.

Les moyens de retenue 2 comprennent une ou plusieurs couronnes, telles que 2a et 2b, de griffes de retenue 20.

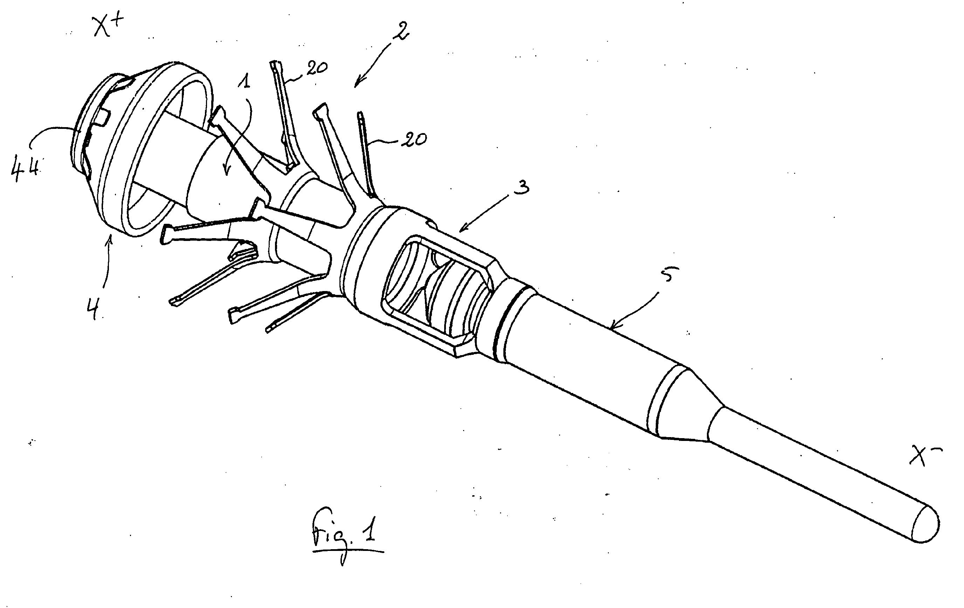

Chacune de ces griffes 20 présente une extrémité libre 22 sollicitée par une force élastique vers une configuration de déploiement radial, visible sur les figures 1 et 2, et équivalente à celle des baleines d'un parapluie ouvert.

Selon un aspect de l'invention, chacune de ces griffes 20 présente une extrémité liée 21 qui est fixée à la périphérie du tube 1, en amont de l'obturateur annulaire 4 et en aval du clapet central 3.

Pour la mise en place du dispositif dans une canalisation K, les griffes 20 doivent être repliées radialement vers le tube 1 pour permettre à ce dispositif de progresser dans cette canalisation malgré l'existence d'éventuelles restrictions de diamètre de cette canalisation, après quoi les griffes 20 sont autorisées à reprendre spontanément leur configuration déployée pour assurer l'ancrage de ce dispositif dans la canalisation.

Cette mise en place peut être réalisée grâce à l'emploi d'un outil tel qu'illustré à la figure 3, connu en soi par le brevet EP 1 059 481, et servant de vecteur au dispositif de l'invention.

Un tel outil comprend par exemple une douille DL associée à un vérin VR, en l'occurrence hydraulique, dont le piston PS se prolonge par un poussoir PO conçu pour se déplacer sur commande dans la douille DL.

Cet outil est porté par une extrémité d'un jonc flexible (non représenté) qui peut être introduit dans la canalisation K jusqu'au point choisi pour l'implantation du dispositif de l'invention.

Pour introduire le dispositif de l'invention dans une canalisation, ce dispositif est d'abord placé, en configuration repliée et comprimée radialement, dans la douille DL de cet outil.

L'outil est poussé dans la canalisation, par l'intermédiaire du jonc flexible, jusqu'à ce que la douille DL atteigne l'emplacement choisi pour l'implantation du dispositif.

Un fluide hydraulique est alors injecté, à travers le jonc, dans une extrémité XT du vérin VR, et le poussoir PO, mû par le piston PS, expulse le dispositif hors de la douille DL.

Cette procédure est rendue possible par le fait que le dispositif de l'invention peut être comprimé dans la douille DL jusqu'à présenter un diamètre fortement réduit, qui facilite la traversée des passages étroits de la canalisation K.

En outre, la force élastique radiale que développent les griffes 20 en état de constriction dans la douille DL suffisent à garantir la cohésion mécanique de l'ensemble que forment la douille DL et le dispositif de L'invention pour l'introduction de ce dernier dans la canalisation.

Selon un autre aspect de l'invention, les griffes 20 présentent, sous application d'une compression radiale et notamment dans leur état de constriction à l'intérieur de la douille DL, une configuration de repli dans laquelle leurs extrémités libres respectives 22 sont tournées vers l'obturateur annulaire 4 et, pour certaines griffes au moins, immédiatement adjacentes à cet obturateur.

Cet agencement a pour effet de minimiser la longueur de la douille DL, donc de l'outil d'insertion illustré à la figure 1 et plus globalement de l'ensemble de l'outil d'insertion et du dispositif de sécurité, ce qui permet à cet ensemble de passer dans des coudes de la canalisation K présentant des rayons de courbure relativement faibles.

Comme le montrent les figures 1 et 2, l'obturateur annulaire 4 comprend un joint 40 en matériau élastomère dont une extrémité aval 41 est fixée au tube 1.

Ce joint 4 est bordé sur son extrémité amont par une lèvre 42 sensiblement cylindrique et coaxiale au tube 1, et présente une section axiale intermédiaire 43 de forme au moins partiellement conique.

L'ensemble de ce joint 4 présente par ailleurs une symétrie de révolution autour de l'axe longitudinal X du dispositif, et une concavité tournée vers l'amont X-.

Sous l'effet d'une compression radiale, et notamment lorsqu'il se trouve comprimé dans la douille DL, le joint 40 présente par construction un diamètre total inférieur à celui de la section minimum de la canalisation, alors que ce joint, lorsqu'il est libéré de toute contrainte, présente un diamètre total non seulement supérieur à celui de la section minimum de la canalisation, mais de préférence même un diamètre total au moins voisin de la section maximum de cette canalisation.

En d'autres termes, le joint 40 présente des dimensions qui permettent à la lèvre 42 de venir se plaquer spontanément sur la paroi interne de la canalisation K dès la mise en place du dispositif de sécurité.

Lorsque la canalisation K est en outre le siège d'un écoulement de fluide, la lèvre 42 du joint 40 subit, au moins après la fermeture du clapet central 3, une expansion radiale forcée qui la plaque davantage vers la paroi interne de la canalisation K et qui conduit à une obturation optimale de la zone comprise entre la périphérie du tube 1 et la paroi interne de la canalisation.

Pour éviter que le joint 40, alors soumis à une contrainte importante, ne se retourne en modifiant le sens de sa concavité, l'extrémité aval 41 du joint 40 peut être renforcée par une bague de retenue 44 en corolle, de même conicité que le joint, et qui maintient l'extrémité aval 41 de ce dernier sur le tube 1.

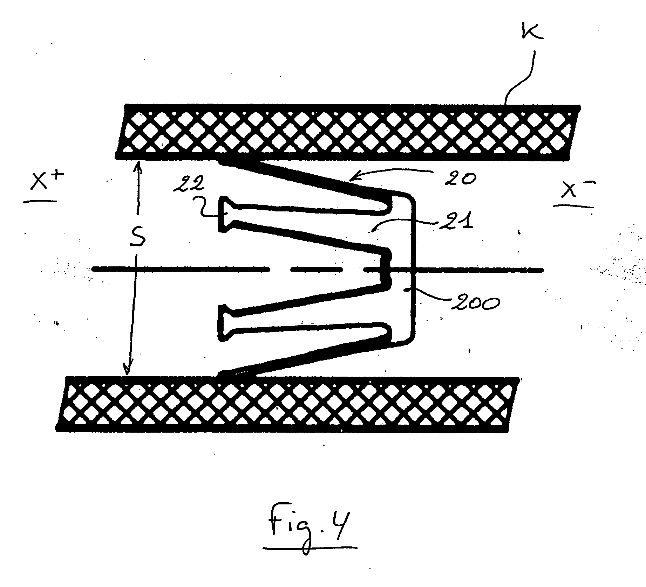

Comme le montrent notamment les figures 1 et 4, les moyens de retenue 2 comprennent de préférence une bague 200 qui enserre le tube 1 et qui relie entre elles les extrémités liées respectives 21 des griffes 20 de chaque couronne ou ensemble de griffes, 2a et 2b.

Dans le cas où le dispositif de l'invention comprend, outre une couronne 2a de griffes disposée à proximité immédiate du joint 40, une deuxième couronne 2b de griffes, cette deuxième couronne présente avantageusement la même constitution que la première couronne 2a et est décalée axialement le long du tube 1 par rapport à la première couronne, les griffes 20 des couronnes voisines 2a et 2b étant disposées en quinconce les unes par rapport aux autres.

Pour optimiser la tenue du dispositif dans la canalisation K, chaque couronne 2a et 2b est par exemple réalisée en acier.

Il est en outre judicieux de prévoir que chacune des griffes 20 présente, depuis son extrémité liée 21 vers son extrémité libre 22, une largeur d'abord décroissante sur les sept huitièmes au moins de sa longueur jusqu'à atteindre une valeur minimale, puis une largeur croissante à partir de cette valeur minimale.

La force élastique de rappel des griffes 20 peut alors être optimisée en donnant à chacune des griffes 20, en configuration de déploiement, une cambrure qui l'éloigne du tube 1 à distance croissante de son extrémité liée 21.

## Revendications

1. Dispositif de sécurité apte à être inséré dans une canalisation de fluide (K) de section minimum déterminée pour la protéger contre un débit excessif du fluide qui y circule d'amont (X-) en aval (X+), ce dispositif comprenant :
- un tube (1) présentant des extrémités amont et aval (10, 11) ouvertes et offrant au fluide une voie de circulation centrale (CC),
- des moyens de retenue (2) pour maintenir ce dispositif en place dans la canalisation (K),
- des moyens de contrôle de circulation de fluide (3, 4), incluant un clapet central (3) et un obturateur annulaire (4) élastiquement déformable et fixé à la périphérie externe du tube (1), et
- un corps creux (5) fixé au tube (1) dans le prolongement et en amont de ce tube,
les moyens de retenue (2) incluant un premier ensemble (2a) de griffes (20) dont chacune présente une extrémité libre (22) sollicitée par une force élastique vers une configuration de déploiement radial équivalente à celle des baleines d'un parapluie ouvert, et ce dispositif évoluant entre une configuration de repos, qu'il adopte en cas de débit normal du fluide et dans laquelle le clapet central (3) libère la voie de circulation centrale (CC), et une configuration de sécurité, qu'il adopte en cas de débit excessif du fluide et dans laquelle le clapet central (3) obture la voie de circulation centrale (CC), les griffes (20) présentant sélectivement, sous application d'une compression radiale, une configuration de repli dans laquelle leurs extrémités libres respectives (22) sont tournées vers l'obturateur annulaire (4),
**caractérisé en ce que** chacune des griffes (20) présente une extrémité liée (21) fixée à la périphérie du tube (1) en amont de l'obturateur annulaire (4).

2. Dispositif de sécurité suivant la revendication 1, **caractérisé en ce que** l'obturateur annulaire (4) comprend un joint (40) en matériau élastomère dont une extrémité aval (41) est fixée au tube (1), ce joint présentant une symétrie de révolution, une section axiale au moins partiellement conique, et une concavité tournée vers l'amont.

3. Dispositif de sécurité suivant la revendication 2, **caractérisé en ce que** le joint (40) présente sélectivement, sous application d'une compression radiale, un diamètre total inférieur à celui de la section minimum déterminée de la canalisation, et, hors contrainte, un diamètre total supérieur à celui de la section minimum déterminée de la canalisation.

4. Dispositif de sécurité suivant la revendication 2 ou 3, **caractérisé en ce que** le joint (40) est bordé par une lèvre (42) sensiblement cylindrique et coaxiale au tube (1).

5. Dispositif de sécurité suivant l'une quelconque des revendications 2 à 4, **caractérisé en ce que** l'obturateur annulaire (4) comprend en outre une bague de retenue (44) renforçant l'extrémité aval (41) du joint (40) et la maintenant sur le tube (1).

6. Dispositif de sécurité suivant l'une quelconque des revendications précédentes, **caractérisé en ce que** les moyens de retenue (2) comprennent une bague (200) enserrant le tube (1) et reliant entre elles les extrémités liées respectives (21) des griffes (20) du premier ensemble (2a) de griffes.

7. Dispositif de sécurité suivant l'une quelconque des revendications précédentes, **caractérisé en ce que** chacune des griffes (20) présente, depuis son extrémité liée vers son extrémité libre, une largeur d'abord décroissante sur les sept huitièmes au moins de sa longueur jusqu'à atteindre une valeur minimale, puis une largeur croissante à partir de cette valeur minimale.

8. Dispositif de sécurité suivant l'une quelconque des revendications précédentes, **caractérisé en ce que** chacune des griffes (20) présente, en configuration de déploiement, une cambrure qui l'éloigne du tube (1) à distance croissante de son extrémité liée (21).

9. Dispositif de sécurité suivant l'une quelconque des revendications précédentes combinée à la revendication 6, **caractérisé en ce que** les moyens de retenue (2) incluent un deuxième ensemble (2b) de griffes (20) de même constitution que le premier ensemble (2a) et décalé axialement le long du tube (1) par rapport à ce premier ensemble, les griffes (20) des premier et deuxième ensembles étant disposées en quinconce les unes par rapport aux autres.

10. Dispositif de sécurité suivant l'une quelconque des revendications précédentes, **caractérisé en ce que** les moyens de retenue (2) sont réalisés en acier.

## Claims

1. A safety device that can be inserted in a pipe of fluid (K) of determined minimal cross-sectional area to protect it from an excessive flow of fluid flowing therein from an upstream side (X-) to a downstream side (X+), this device comprising:
- a tube (1) exhibiting open upstream and downstream ends (10, 11) and providing the fluid with a central flow path (CC),
- retention means (2) for holding this device in place in the pipe (K),
- control means for controlling the fluid circulation (3, 4), including a central valve (3) and an elastically deformable annular shutter (4) fastened to the outer periphery of the tube (1), and
- a hollow body (5) fastened to the tube (1) in the extension of and upstream from this tube,
the retention means (2) including a first set (2a) of clamps (20) each one of which exhibits a free end (22) biased by an elastic force towards a radial unfolding configuration equivalent to that of the spokes of an open umbrella, and this device moving between a resting configuration which it adopts in the event of a normal flow of the fluid and in which the central valve (3) frees the central flow path (CC), and a safety configuration, which it adopts in the event of an excessive flow of fluid and in which the central valve (3) shuts-off the central flow path (CC), the clamps (20) selectively exhibit, under the application of a radial compression, a folded configuration in which their respective free ends (22) are turned towards this annular shutter (4),
**characterized in that** each one of the clamps (20) exhibits a tied (21) end fastened to the periphery of the tube (1) upstream from the annular shutter (4).

2. The safety device according to claim 1, **characterized in that** the annular shutter (4) comprises a seal (40) made of an elastomeric material a downstream end (41) of which is fastened to the tube (1), this seal exhibiting a rotational symmetry, at least a partially conical axial cross-section, and a concavity turned upstream.

3. The safety device according to claim 2, **characterized in that** the seal (40) selectively exhibits, under the application of a radial compression, a total diameter less than that of the determined minimal cross-sectional area of the pipe, and in the absence of stress, a total diameter larger than that of the determined minimal cross-sectional area of the pipe.

4. The safety device according to claim 2 or 3, **characterized in that** the seal (40) is edged by a substantially cylindrical lip (42) coaxial to the tube (1).

5. The safety device according to any one of claims 2 to 4, **characterized in that** the annular shutter (4) further comprises a retention ring (44) reinforcing the downstream end (41) of the seal (40) and holding it on tube (1).

6. The safety device according to any one of the preceding claims, **characterized in that** the retention means (2) comprise a ring (200) encircling the tube (1) and linking the respective tied ends (21) of the clamps (20) of the first set (2a) of clamps.

7. The safety device according to any one of the preceding claims, **characterized in that** each one of the clamps (20) exhibits, from its tied end towards its free end, a width that first decreases at least over the seven eighths of its length until it reaches a minimal value, then an increasing width starting from this minimal value.

8. The safety device according to any one of the preceding claims, **characterized in that** each one of the clamps (20) exhibits, in the unfolding configuration, a curvature that moves it away from the tube (1) at an increasing distance from its tied end (21).

9. The safety device according to any one of the preceding claims, combined with claim 6, **characterized in that** the retention means (2) include a second set (2b) of clamps (20) of the same constitution as the first set (2a) and shifted axially along the tube (1) with respect to this first set, the clamps (20) of the first and second sets being arranged in staggered rows.

10. The safety device according to any one of the preceding claims, **characterized in that** the retention means (2) are made from steel.

## Patentansprüche

1. Sicherheitsvorrichtung, die in eine Fluidrohrleitung (K) mit einem bestimmten Mindestquerschnitt eingesetzt werden kann, um sie vor einer übermäßigen Durchflussmenge von darin von stromaufwärts (X-) nach stromabwärts (X+) fließendem Fluid zu schützen, wobei diese Vorrichtung aufweist:
- ein Rohr (1), das ein stromaufwärtiges und ein stromabwärtiges Ende (10, 11) aufweist, die offen sind, und das dem Fluid einen mittigen Strömungsweg (CC) bietet,
- Haltemittel (2), um diese Vorrichtung in der Rohrleitung (K) in Stellung zu halten,
- Mittel (3, 4) zum Steuern der Fluidströmung, die ein mittiges Ventil (3) und ein ringförmiges Verschlussglied (4) umfassen, das elastisch verformbar und an den Außenumfang des Rohres (1) befestigt ist, und
- einen Hohlkörper (5), der an das Rohr (1) in der Verlängerung und diesem Rohr vorgelagert befestigt ist,
wobei die Haltemittel (2) eine erste Einheit (2a) von Klauen (20) umfassen, von denen jede ein freies Ende (22) aufweist, das von einer Federkraft in eine radiale Ausklappkonfiguration beaufschlagt wird, die derjenigen von Schirmspeichen eines geöffneten Regenschirms entsprechen, wobei diese Vorrichtung zwischen einer Ruhekonfiguration, die sie bei einer normalen Durchflussmenge des Fluides einnimmt und in welcher das mittige Ventil (3) den mittigen Strömungsweg (CC) freigibt, und einer Sicherheitskonfiguration verstellbar ist, die sie bei einer übermäßigen Durchflussmenge von Fluid einnimmt und in welcher das mittige Ventil (3) den mittigen Strömungsweg (CC) verschließt, wobei die Klauen (20) unter der Wirkung einer radialen Kompression selektiv eine Einklappkonfiguration aufweisen, in welcher ihre freien Enden (22) jeweils dem ringförmigen Verschlussglied (4) zugewandt sind,
**dadurch gekennzeichnet, dass** jede der Klauen (20) ein gebundenes Ende (21) aufweist, das am Umfang des Rohres (1) stromaufwärts des ringförmigen Verschlussglieds (4) befestigt ist.

2. Sicherheitsvorrichtung nach Anspruch 1, **dadurch gekennzeichnet, dass** das ringförmige Verschlussglied (4) eine Dichtung (40) aus Elastomermaterial enthält, von der ein stromabwärtiges Ende (41) am Rohr (1) befestigt ist, wobei diese Dichtung rotationssymmetrisch ausgeführt ist, einen zumindest teilweise konischen axialen Querschnitt aufweist und eine stromaufwärts gerichtete Konkavität hat.

3. Sicherheitsvorrichtung nach Anspruch 2, **dadurch gekennzeichnet, dass** die Dichtung (40) unter der Wirkung einer radialen Kompression selektiv einen Gesamtdurchmesser aufweist, der kleiner als der des bestimmten Mindestquerschnitts der Rohrleitung ist, und bei ausbleibender Beanspruchung einen Gesamtdurchmesser hat, der größer als der des bestimmten Mindestquerschnitts der Rohrleitung ist.

4. Sicherheitsvorrichtung nach Anspruch 2 oder 3, **dadurch gekennzeichnet, dass** die Dichtung (40) von einer Dichtlippe (42) gesäumt wird, die im wesentlichen zylindrisch ausgeführt ist und koaxial zum Rohr (1) verläuft.

5. Sicherheitsvorrichtung nach einem der Ansprüche 2 bis 4, **dadurch gekennzeichnet, dass** das ringförmige Verschlussglied (4) ferner einen Rückhaltering (44) aufweist, mit welchem das stromabwärtige Ende (41) der Dichtung (40) verstärkt und am Rohr (1) gehalten wird.

6. Sicherheitsvorrichtung nach einem der vorangehenden Ansprüche, **dadurch gekennzeichnet, dass** die Rückhaltemittel (2) einen Ring (200) aufweisen, der das Rohr (1) umschließt und die gebundenen Enden (21) der Klauen (20) der ersten Einheit (2a) von Klauen miteinander verbindet.

7. Sicherheitsvorrichtung nach einem der vorangehenden Ansprüche, **dadurch gekennzeichnet, dass** jede der Klauen (20) von ihrem gebundenen Ende zu ihrem freien Ende hin eine Breite aufweist, die zunächst über zumindest sieben Achtel ihrer Länge abnimmt, bis sie ein Mindestmaß erreicht, wonach sie ausgehend von diesem Mindestmaß in der Breite zunimmt.

8. Sicherheitsvorrichtung nach einem der vorangehenden Ansprüche, **dadurch gekennzeichnet, dass** jede der Klauen (20) in Ausklappkonfiguration eine Krümmung aufweist, mit welcher sie sich bei zunehmendem Abstand von ihrem gebundenen Ende (21) vom Rohr entfernt.

9. Sicherheitsvorrichtung nach einem der vorangehenden Ansprüche in Kombination mit Anspruch 6, **dadurch gekennzeichnet, dass** die Rückhaltemittel (2) eine zweite Einheit (2b) von Klauen (20) umfassen, die gleicher Beschaffenheit wie die erste Einheit (2a) ist und entlang des Rohres (1) axial zu dieser ersten Einheit versetzt ist, wobei die Klauen (20) der ersten und der zweiten Einheit auf Lücke zueinander angeordnet sind.

10. Sicherheitsvorrichtung nach einem der vorangehenden Ansprüche, **dadurch gekennzeichnet, dass** die Rückhaltemittel (2) aus Stahl ausgeführt sind.
